# EUROPEAN PATENT APPLICATION

(11) **EP 1 637 681 A1**
(43) Date of publication of application: **22.03.2006**
(21) Application number: 04712058.9
(22) Date of filing: 18.02.2004
(51) Int. Cl.: E05F 11/38, B60J 1/17

(54) **ADJUSTABLE TRACK FOR MOTOR VEHICLE WINDOW REGULATORS**

(30) Priority: 30.05.2003 ES 200301340 U
(71) Applicant: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio
(86) International application number: PCT/ES2004/000070
(87) International publication number: WO 2004/106685

(57) **Abstract**

It comprises a section member with a fastening area engaging said section member to the vehicle door through a hole through which a screw is passed. The rail may be rotated relative to the vehicle door by means of a protrusion formed around the hole where the screw is projecting therefrom, the free end of which is fitted into a hole formed in the vehicle door and screwed up into a nut through a washer having a surface complementary to the shape of the protrusion. This protrusion may be either a deep drawing formed on the rail, an additional piece or an elastic washer provided in the surface of the rail.

## Description

The present invention relates to a power window device for motor vehicles and, more particularly, to a rail for a power window device which can be properly adjusted in an accurate and a very simple fashion.

Typically, a power window device for motor vehicles comprises a rail through which a slider is moved attached to the lower edge of the window pane in the vehicle door, said slider being driven through a driving cable by means of either an electric motor or hand operated by a crank handle.

At present, the rail configuration of the power window device should be such that it includes an assembling pivot point so that it is adapted to the final position. Prior art therefore employs solutions such as the provision of an spring flange for rotation of the upper point of the power window device or a pivot block inserted within a U-shaped section member in the rail which is provided with a joint shaft and a stop perpendicular to said shaft for rotation of the rail.

Although these mechanical systems of rotation are found to be effective for the proper positioning of the rail and therefore the whole assembly formed by the power window device and the window, it has been found that they are too complex and costs involved in the assembly of the power window device are therefore unnecessarily increased.

The present invention seeks to provide an effective system for assembling the rail of a power window device that is allowed to be moved, and considerably simpler and cost effective than systems known thus far.

For this purpose, the invention provides a new design at the upper point of anchorage of the power window device that acts as a ball joint, allowing rotation of the rail for carrying out the adjustment at the lower point of anchorage thereof.

The adjustable rail for power window devices of motor vehicles of the present invention essentially comprises a metal section member having a fastening portion adapted for attaching said section member to the vehicle door through a hole formed in said area through which a screw is passed. Said fastening area is usually arranged at the upper end of the section member of the rail so that the adjusting movement is carried out at the lower end of the rail of the power window device.

The main feature of such a rail is that it further comprises means for rotating the rail relative to the vehicle door. Said means comprise a protrusion formed around the hole of said fastening area from which said screw is projected, the free end of which is fitted into the hole formed in the vehicle door and screwed up into a nut with a washer having a surface complementary to the shape of said protrusion.

Preferably, said protrusion in the rail is a deep drawing on the section member of the rail itself, on the fastening area to the vehicle door. However, in an alternative embodiment, the protrusion may also be an additional piece attached to the surface of the section member of the rail, in the fastening area to the vehicle door or even an elastic washer provided in said surface of the section member.

There is provided that the protrusion of the rail of the power window device is rounded in shape so that said means of rotation of the rail act as a ball joint. The protrusion may be concave or convex in shape.

In an alternative embodiment of the invention it is possible that the adjustable rail has an adjustable, upper fastening end as a moving ball joint once the nut has been screwed up. Before being fastened to the lower end, the rail may be slightly rotated although the nut has been screwed up, which allows to carry out adjustment through the lower end of the rail. For this purpose, the fastening screw has a stem provided with an area having a diameter greater than the rest of the stem slightly projecting outside the fastening area to the vehicle door. In the assembled position, said greater diameter area of the stem of the screw is arranged against the washer. There is also provided that an additional spring nut is fitted between the nut and the washer for taking up tolerances between the power window device and the vehicle door for preventing the nut from being unscrewed and for allowing, at the same time, the movement of the rail once the screw has been screwed up.

Very effective, precise and mainly economic and simple means for rotating the rail are thus achieved. With the rotating means herein disclosed it is possible to rotate the rail around its upper end at an angle of 2-3° for the power window device adjustment.

The features and the advantages of the rail object of the present invention will be clearer from the detailed description of a preferred embodiment thereof which will be given hereinafter by way of non limitative example with reference to the drawings that are accompanied, in which:
Fig. 1 is an elevational view of the rail of a power window device according to the invention in which the adjusting movement thereof is shown;
Fig. 2 is a cutaway elevational view of a first embodiment of the rotating means in the fastening area of the rail to the vehicle door;
Figs. 3, 4 and 5 are cutaway elevational views of alternative embodiments of the fastening area of the rail to the vehicle door in which the anchorage in the vehicle door is also shown;
Fig. 6 is a cutaway elevational view of an alternative embodiment of the rotating means in the fastening area of the rail to the vehicle door in which the assembly acts as a moving ball joint once the nut has been screwed up.

A detailed list of the various parts cited in the present patent application is given below:
- (1): rail of the power window device;
- (2): upper fastening point of the rail;
- (3): lower end of the rail;
- (4): direction of movement for regulation;
- (5): fastening area;
- (6): vehicle door;
- (7): hole;
- (8): screw;
- (9): screw end;
- (10): hole of the vehicle door;
- (11): nut;
- (12): protrusion;
- (13): washer;
- (14): spring washer;
- (C): center of rotation of the rail; and
- (d): projecting distance of the area of greater diameter from the stem of the screw.

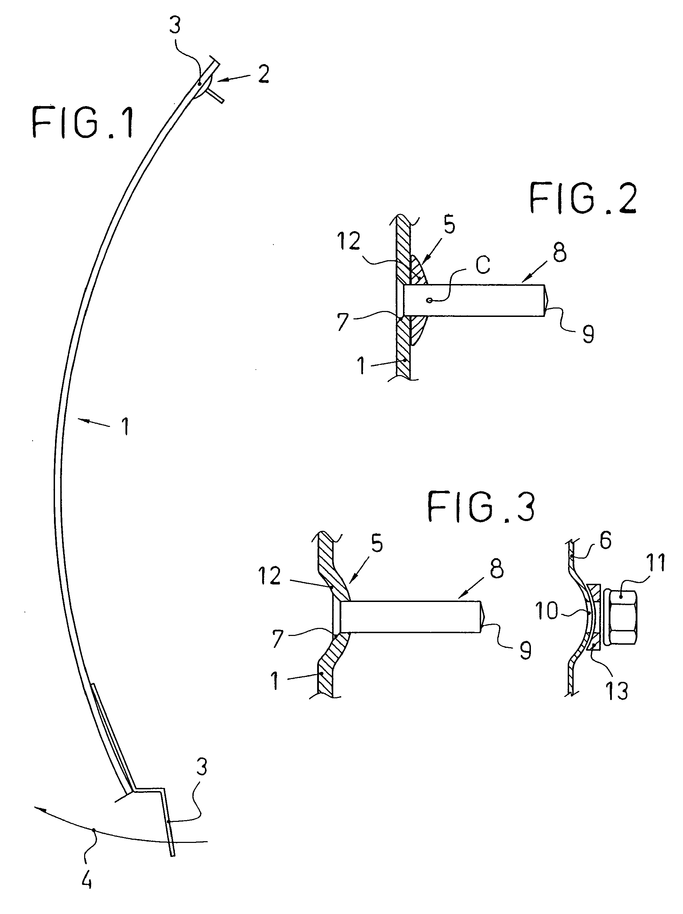

A rail (1) of a power window device for motor vehicles has been diagrammatically depicted in fig. 1 of the drawings enclosed in the present specification. The rail (1) has an upper fastening point (2) forming the center of rotation thereof (referenced by (C) in fig. 2) for its adjustment from the lower end (3) as shown by arrow (4) in fig. 1 of the drawings.

The upper fastening point (2) of the power window device acts as a ball joint, allowing rotation of the rail (1) to carry out the adjustment in said lower point (3).

The upper fastening point (2) of the metal section member of the rail (1) is included in a fastening area referenced by (5) in figs. 2 to 5 in the drawings herein attached.

This fastening area (5) is adapted for attaching the section member of the rail (1) to the vehicle door (6) that is shown in figs. 3, 4 and 5. In said fastening area (5) there is provided a hole (7) through which a fastening screw (8) is passed having an end (9) passing through a hole (10) inside of the vehicle door (6) and it is screwed up into a nut (11) through a washer (13), as it can be seen from figs. 3 to 5 in the drawings.

Round shaped rotating means are provided for rotating the rail (1) relative to the vehicle door (6) (values ranging from 2 to 3°), said means comprising a round shaped protrusion (12) provided around the hole (7) of the fastening area (5).

In the embodiment of the fig. 2, protrusion (12) is an additional piece attached to the surface of the section member of the rail (1) in said fastening area (5) to the vehicle door (6). The rail (1) is therefore allowed to be rotated for regulation around the center of rotation (C) shown in said fig. 2.

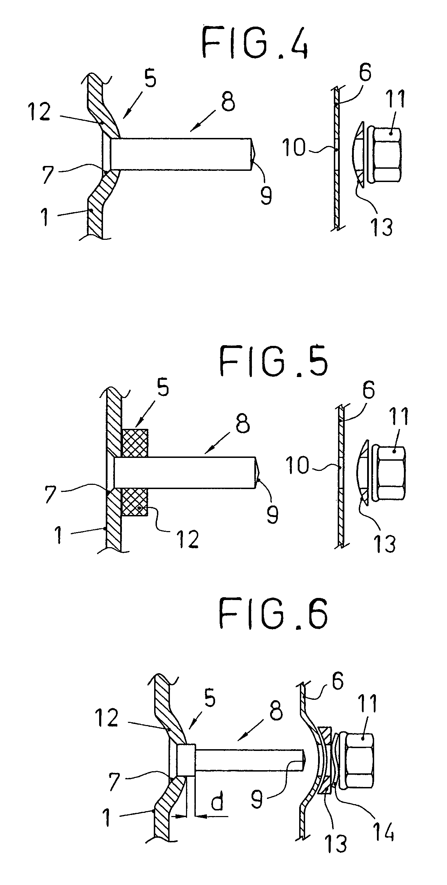

In the alternative embodiment shown in figs. 3 and 4, protrusion (12) is a deep drawing formed on the section member of the rail (1) itself, on the fastening area (5).

As it can be seen, the above mentioned washer (13) has a surface complementary to the shape of said protrusion (12), which may be convex (fig. 3) or concave (fig. 4) in shape, depending on the shape of the inner section member of the vehicle door (6). In the case of fig. 3, the washer (13) is shaped so that it is adapted to the section member of the door (6), while in the case of fig. 4, the washer (13) is shaped so that it is adapted for rotation of the rail (1).

In the alternative embodiment in fig. 5, the protrusion is an elastic washer provided in said surface of the section member of the rail (1) in the fastening area (5) .

In fig. 6 an embodiment is shown in which the assembly acts as a moving ball joint once the nut (11) has been screwed up, that is to say, before fastening to the lower end (3) of the rail (1) wherein it may be slightly rotated although the nut (11) is tightened so that adjustment may be carried out as indicated at (4) in fig. 1. For this purpose, the fastening screw (8) is provided with a stem having an area of greater diameter than the rest of the stem projecting out of the fastening area (5) at a distance (d) to the vehicle door (6). In the assembled position, said area of greater diameter in the stem of the screw (8) is arranged against the washer (13). As it can be seen, between the nut (11) and the washer (13) there is provided a spring nut (14) for taking up existing tolerances between the power window device and the vehicle door (6), as well as for preventing the nut (11) from being unscrewed and for allowing the movement of the rail (1).

Once having been sufficiently described what the adjustable rail for power window devices for motor vehicles of the present invention present patent application consists in accordance to the enclosed drawings, it is understood that any detail modification can be introduced as appropriate, provided that variations may alter the essence of the invention as summarised in the appended claims.

## Claims

1. Adjustable rail (1) for power window devices for motor vehicles comprising a section member having a fastening area (5) adapted for attaching said section member to the vehicle door (6) through a hole (7) of said area through which a fastening screw (8) is passed, **characterized in that** it further comprises means for rotating the rail (1) relative to the vehicle door (6) comprising a protrusion (12) formed around the hole (7) of said fastening area (5) from which said fastening screw (8) is projected, the free end (9) of which is fitted into a hole (10) formed in the vehicle door (6) and screwed up into a nut (11) through a washer (13) having a surface complementary to the shape of said protrusion (12).

2. Adjustable rail (1) for power window devices for motor vehicles as claimed in claim 1, **characterized in that** said protrusion (12) is a deep drawing formed on the section member of the rail (1) itself, on the fastening area (5) to the vehicle door (6).

3. Adjustable rail (1) for power window devices for motor vehicles as claimed in claim 1, **characterized in that** said protrusion (12) is an additional piece attached to the surface of the section member of the rail (1), in the fastening area (5) to the vehicle door (6).

4. Adjustable rail (1) for power window devices for motor vehicles as claimed in claim 1, **characterized in that** said protrusion (12) is an elastic washer provided in the surface of the section member of the rail (1), in the fastening area (5) to the vehicle door (6).

5. Adjustable rail (1) for power window devices for motor vehicles as claimed in any of the preceding claims, **characterized in that** said protrusion (12) is rounded in shape, said means for rotating of the rail acting as a ball joint.

6. Adjustable rail (1) for power window devices for motor vehicles as claimed in claim 5, **characterized in that** said protrusion (12) is concave in shape.

7. Adjustable rail (1) for power window devices for motor vehicles as claimed in claim 5, **characterized in that** said protrusion (12) is convex in shape.

8. Adjustable rail (1) for power window devices for motor vehicles as claimed in any of the preceding claims, **characterized in that** said fastening area (5) is provided at the upper end (2) of the section member of the rail (1).

9. Adjustable rail (1) for power window devices for motor vehicles as claimed in any of the preceding claims, **characterized in that** said fastening screw (8) is provided with a stem having an area of greater diameter than the rest of the stem projecting outwardly at a distance (d) from said fastening area (5) to the vehicle door (6), said area of greater diameter of the stem of the screw (8) being provided, in the assembled position, against the washer (13).

10. Adjustable rail (1) for power window devices for motor vehicles as claimed in claim 9, **characterized in that** a spring nut (14) is provided between said nut (11) and said washer (13) for taking up the existing tolerances between the power window device and the vehicle door (6), for preventing the nut (11) from being unscrewed and for allowing the movement of the rail once the screw has been screwed up.
